# EUROPEAN PATENT APPLICATION

(11) **EP 1 281 936 A2**
(43) Date of publication of application: **05.02.2003**
(21) Application number: 02380172.3
(22) Date of filing: 31.07.2002
(51) Int. Cl.: G01D 5/20

(54) **Analog control mechanism**

(30) Priority: 01.08.2001 ES 200101808
(71) Applicant: Ecler Laboratorio de Electro Acustica S.A., 08038 Barcelona (ES)
(72) Inventor: Angel Sanuy Sarroca, 08038 Barcelona (ES); Mele Barrena Domingo, 08038 Barcelona (ES); Mas Mas Jose Maria, 08038 Barcelona (ES)
(74) Representative: Marques Alos, Fernando

(57) **Abstract**

**"ANALOG CONTROL MECHANISM"** through which a mechanical movement is converted into an electrical dimension (voltage or current). It uses the principle of the total or partial variation of a magnetic field through the movement of an electrical conducting object relative to a set of energising and receiving coils. The operating principle behind this invention is based on the shielding of the magnetic flux lines that emerge from the poles of an emitting coil and, to a greater or lesser extent, reach a receiving coil. Basically, it consists of an analog control mechanism or sensor which converts spatial movement into an electric current or voltage variation which may or may not be linear. This invention solves the disadvantages of physical wear and tear seen in similar existing devices as there is no contact between the parts that make up the system of control. There are numerous fields of application, including a specific application for controlling the volume of an audio-frequency system.

## Description

The objective of this invention, as expressed in the statement to this descriptive report, consists of an **"ANALOG CONTROL MECHANISM"**.

Through this analog control mechanism, a mechanical movement is converted into an electrical dimension (voltage or current). It uses the principle of the total or partial variation of a magnetic field through the movement of an electrical conducting object relative to a set of energising and receiving coils. It has a number of fields of application; a specific application for controlling the volume of an audio-frequency system is described here.

Basically, it consists of an analog control mechanism or sensor which converts spatial movement into an electric current or voltage variation which may or may not be linear.

The operating principle behind this invention is based on the shielding of the magnetic flux lines that emerge from the poles of an emitting coil and, to a greater or lesser extent, reach a receiving coil. Various different operating topologies are described, though the aim is not to provide an exhaustive description of the multiple combinations and variations of the invention.

It is common to use resistive potentiometers in both adjusting or control applications and position detection applications. These devices are made up of one or more components of resistive material on which a contact element, commonly called a wiper, slides.

The main disadvantage of these devices is the wear and tear that both the wiper and the resistive element suffer due to the friction between the two, limiting the number of operations possible and, therefore, the life of the product.

This invention solves this disadvantage as there is no mechanical contact between the parts that make up the system of control. Thus, the useful life of the invention is limited to the wear and tear of the mechanical guiding or operating parts.

In its most basic form, the invention consists of a coil (with or without a magnetic core) energised by an alternating current, which, in turn, generates a magnetic field. This field will reach a receiving coil if the magnetic flux is not intercepted by a conducting element, which we will call a shield. As the shield is inserted into the space between the two coils (the air gap), the shielding effect causes the voltage (or current) induced in the terminals of the receiving coil to reduce until it reaches a minimum value which arises when the shield is fully inserted. The shield is joined to a lever or other control mechanism, and is moveable with respect to the coils. Foucault currents are generated on the shield.

A variation of the configuration is obtained by running an alternating current through the two coils and using the shield to vary the voltage present in the middle terminal relative to the other terminals of the coils. The paramagnetic part ensures that the field lines are closed when they are not intercepted by the shield.

A third alternative is obtained by arranging the three coils in a line, with the movement of the conducting part having the effect of either increasing or decreasing the voltage induced in the receiving coils on the ends.

The voltage in the terminals of one receiving coil is near the maximum value, while that of the other receiving coil is minimal. The movement of the shield facilitates the movement through all the intermediate stages until reaching the reverse situation to that described: minimum voltage in the first coil, maximum voltage in the second coil.

Another possibility is obtained by arranging the receiving coils on the opposite side of the emitting or energising coil.

A further option is to have two energising coils connected in series, parallel or separately to one or more generators of alternating current, preferably sine wave. Opposite these are two or more receiving coils connected to an electronic processing circuit. Moving in the physical space that exists between the set of emitting and receiving coils is an electrical conducting object, which we will call the shield, which blocks selectively the flow between both coils in accordance with the same physical principals outlined above. The receiving coils can also be connected in series, parallel or separately to the electronic processing circuit.

In the final arrangement, the coils are formed using printed circuit boards of one or more layers, whose tracks form turns. Magnetic cores are joined onto them which, although not indispensable, enhance the performance of the system. This system works in the same way as the previous example. In this example, the shield, built on aluminium sheet, is attached to a slider which is moved along a guide by means of a control lever.

This innovative invention may be used in a volume balance circuit, commonly called a crossfader, for use in audio-frequency mixing desks and similar. In this case, a high-frequency generator is used which energises the two emitting coils connected, in this instance, in series. The shield is moved using a lever in the direction of the arrows, alternately increasing or decreasing the voltage induced in the receiving coils; these voltages, which are grounded, are applied to two AC-DC converters (alternating-direct) whose outputs are connected to a differential amplifier whose output is zero when the control lever is in the half-way position and has a positive or negative value depending on the shielding of the coil. The resulting voltage is applied to a linearizing-delinearizing analog and/or digital circuit which affects the linearity of the voltage obtained depending on the position of the element, until obtaining the required response curve. This function can be adjusted with an external control, in this case with a potentiometer; other valid elements for selecting the required linearity are commutators, encoders, microprocessors, etc.

Given that, for the specific function of the heretofore described invention, it is necessary to be able to adjust the audio-frequency effect at the two operating ends of the part, an end-of-track electronic control has been installed. Through the operation of this control, the quality and abruptness of the sound balance effect can be regulated, moving it to either extreme as required by the user. Thus, the maximum effect of the balance can be obtained, for example, at 3 mm from the final track, or at the very end, and the effect can be constantly varied. In this way, the dead or non-operating spaces at the ends can be avoided, allowing the user to take full advantage of the entire range of the operating control.

The invention heretofore described can be used to control other parameters or physical dimensions, and other applications that are not described here are not excluded.

### DESCRIPTION OF THE DIAGRAMS

To illustrate everything explained so far, three pages of drawings are attached to this descriptive report, forming an integral part of it, showing various different arrangements in a simplified and schematic way. These drawings are intended to be purely illustrative and are not an exhaustive representation of the practical possibilities of the invention.

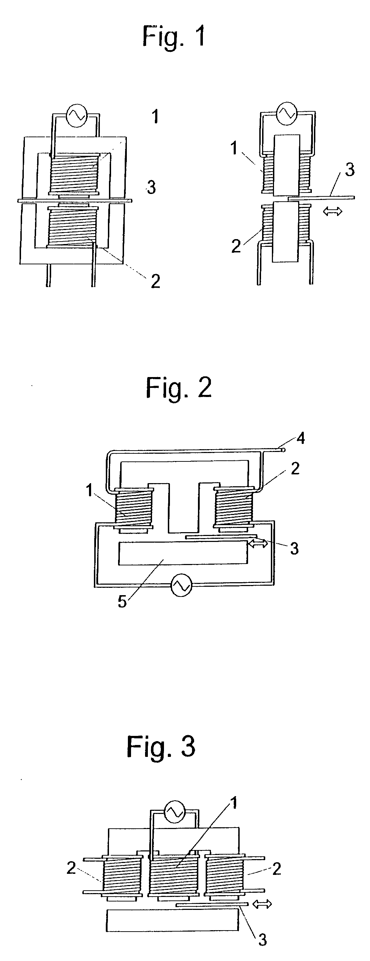

In these diagrams, figure 1 represents a front and side view of the innovative analog control mechanism consisting of two coils.

Figure 2 represents a view of the sensor mechanism with two coils and a paramagnetic part.

Figure 3 represents a view of three coils in series.

Figure 4 represents a view of a different arrangement of the three coils.

Figure 5 represents a view of another arrangement of two energising coils in series or parallel, opposite two receiving coils.

Figure 6 represents a perspective view of the invention applied to a potentiometer, with its different characteristic constitutive parts.

Figure 7 represents a view of an electronic circuit for the control of a device such as that described.

Figure 8 represents a graph showing the curves obtained by adjusting the linearity.

Figure 9 represents a graph showing the curves obtained by adjusting the linearity.

### DESCRIPTION OF A PRACTICAL EXAMPLE

In its most basic form (fig. 1, front and side view), the invention consists of an emitting coil (1) (with or without a magnetic core) energised by an alternating current, which, in turn, generates a magnetic field. This field will reach the receiving coil (2) if the magnetic flux is not intercepted by the conducting element (3), which we will call the shield. As the shield (3) is inserted into the air gap between the coils (1) and (2), the shielding effect causes the voltage (or current) induced in the terminals of the coil (2) to diminish until it reaches a minimum which arises when the shield (3) is fully inserted. The shield (3) is joined to a lever or other control mechanism, and is movable with respect to the coils. Foucault currents are generated on the shield (3).

Another variation is depicted in fig. 2; in it, an alternating current runs through the two coils, with the shield (3) causing a variation in the voltage present in the terminal (4) with respect to the other terminals of the coil. The paramagnetic part (5) allows the field lines to be closed when they are not being intercepted by the shield.

In figure 3, the three coils are arranged in a line, with the movement of the conducting part (3) having the effect of either increasing or decreasing the voltage induced in the receiving coils on the ends (2) such that, in the concrete position outlined in fig. 3, the voltage at the ends of one of the receiving coils (2) is near to the maximum value, whilst the voltage in the other receiving coil (2) is minimal. The movement of the shield (3) facilitates the movement through all the intermediate stages until reaching the reverse situation to that described: minimal voltage in the first coil (2), maximum voltage in the opposite coil (2).

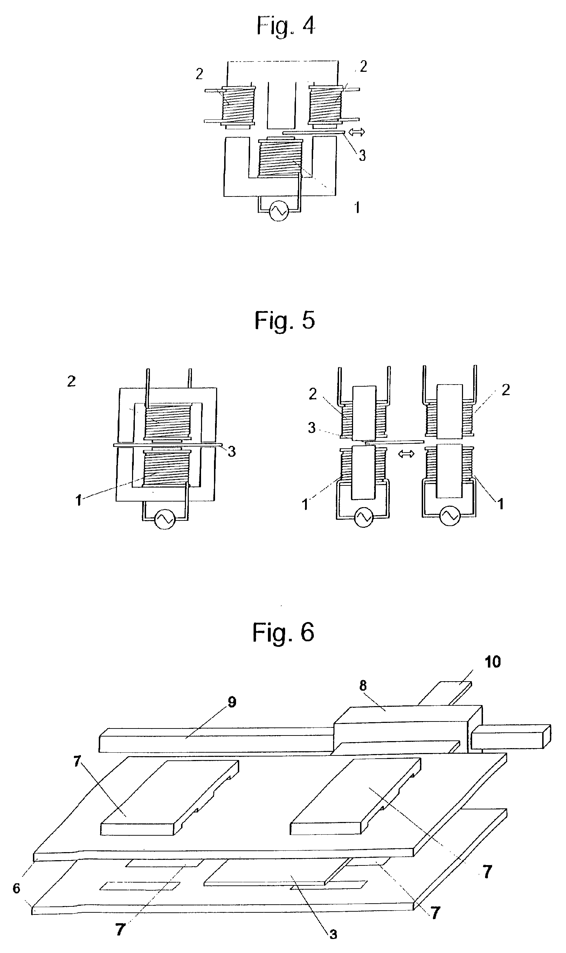

Fig. 4 is a variation of fig. 3 where the receiving coils are opposite the emitting or energising coils.

Fig. 5 (front and side views) is a schematic depiction of the final arrangement. It consists of two energising coils, connected in series, parallel or independently to one or more generators of alternating-current, preferably sine. Opposite these are two or more receiving coils connected to an electronic processing circuit. Moving in the physical space that exists between the set of emitting and receiving coils is the electrical conductor or shield (3) which blocks selectively the flow between both coils in accordance with the same physical principals expressed earlier. The receiving coils can also be connected in series, parallel or separately to the electronic processing circuit.

The final layout can be seen in fig. 6. In it the coils are formed using printed circuit boards (6), of one or more layers, whose tracks form turns (not represented in the diagram). On these, some magnetic cores (7) have been attached which, although not indispensable, enhance the performance of the system. This system works in the same way as the example in figure 5. In this case, the shield (3), built on aluminium sheet, is attached to a slider (8) which moves along a guide (9) by means of a control lever (10).

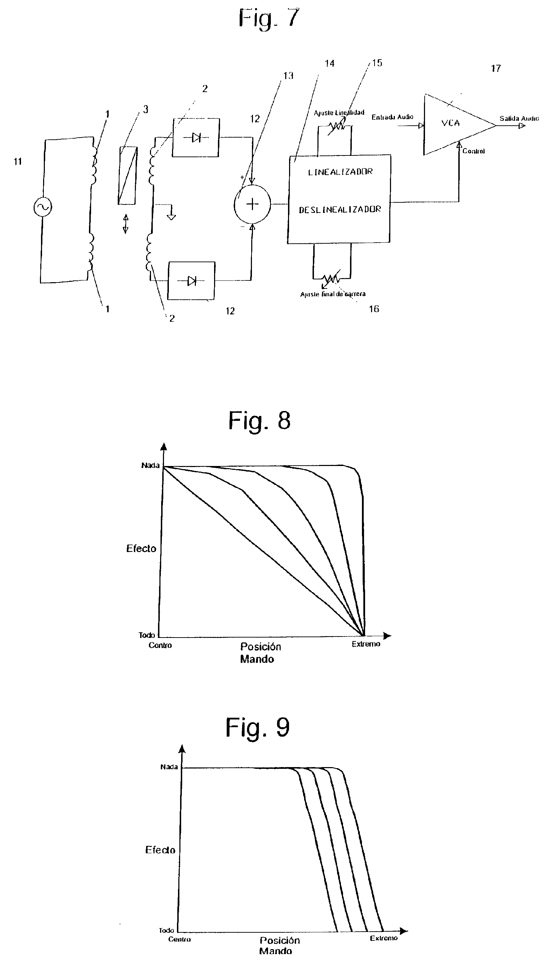

In fig. 7 provides a summary of the electronic processing circuit of an actuator, such as that described so far, applied to a volume balance circuit or "crossfader" for use in audio-frequency mixing desks and similar. It consists of a high-frequency generator (11) which energises the two emitting coils (1) connected, in this instance, in series. The shield (3) is moved using a lever in the direction of the arrows, alternately increasing or decreasing the voltage induced in the receiving coils (2); these voltages, which are grounded, are applied to each of the AC-DC converters (alternating-direct) (12) whose outputs are connected a differential amplifier (13) whose output is zero when the control (3) is in the half-way position and reaches positive or negative values depending on the shielding of both receiving coils (2). The resulting voltage is transferred to a linearizing-delinearizing analog or digital circuit (14) which affects the linearity of the voltage obtained depending on the position of the shielding element (3), until obtaining the required response curve. This function can be adjusted with an external control, in this case with a potentiometer (15); other valid elements for selecting the required linearity are commutators, encoders, microprocessors, etc. In fig. 8, a typical family of curves obtained from adjusting the linearity (15) is depicted; only the variation from the centre to one end is shown, as the circuit is symmetric.

Given that, for the specific function of the heretofore described invention, it is necessary to be able to adjust the audio-frequency effect in the two operating ends of the shield (3), an end-of-track electronic control (16) has been installed. Through the operation of this control, the quality and abruptness of the sound balance effect can be regulated, moving it to either extreme as required by the user. Thus, the maximum effect of the balance can be obtained, for example, at 3 mm from the final track, or at the very end, and the effect can be constantly varied. In this way, dead or non-operating spaces at the ends can be avoided, allowing the user to take full advantage of the entire range of the operating control.

Fig. 9 shows the effect of the control for a fixed control position. The output of the block (14) controls one or more voltage-controlled amplifiers (17) ("VCA"), used in this case to vary the sound volume as a function of the received control voltage.

The invention heretofore described can be used to control other parameters or physical dimensions, and other applications not outlined here are not excluded.

Having explained the concepts behind the invention, the note of claims is drafted next, thus establishing the inventions which are the subject of the claims.

## Claims

1. **"ANALOG CONTROL MECHANISM"**, of the type that uses the conversion of a mechanical movement into an electrical dimension, characterised essentially by the use of a moveable, electrical, conducting object, which may take many diverse forms, to block totally or partially the magnetic flux between two or more coils, according to the characteristic curve which the user hopes to obtain.

2. **"ANALOG CONTROL MECHANISM"**, as described in the claim above, **characterised by** one or more coils acting as energising coils and one or more acting as receiving coils.

3. **"ANALOG CONTROL MECHANISM",** as described in the claims above, **characterised by** one or more coils acting as energising coils to which a voltage or alternating current is applied, and one or more coils as receiving coils, with the detection effected by the variation of the signal level induced in the receiving coils.

4. **"ANALOG CONTROL MECHANISM"**, as described in the claims above, which uses a rotary, slide or oscillating potentiometer for audio signal mixing or control, **characterised by** the control being effected by the variation of the signal level induced in the receiving coils and the use of this signal, whether modified or not, as the input to a volume-control electronic circuit.

5. **"ANALOG CONTROL MECHANISM"**, as described in the claims above, consisting of a rotary, slide or oscillating potentiometer for audio signal mixing or control based on the total or partial blocking of the magnetic flux by means of an electrical conducting object that is moveable between two or more coils made with printed circuit tracks with a nucleus of air or ferromagnetic material; with one or more than one of the coils acting as energising coils to which a voltage or alternating current is applied and one or more than one as receiving coils; the control being effected by the variation in the signal level induced in the receiving coils; and the use of this signal, whether modified or not, as the input to a volume-control electronic circuit.

6. **"ANALOG CONTROL MECHANISM"**, as described in the claims above, consisting of an analog position sensor or control mechanism based on the total or partial blocking of the magnetic flux by means of a moveable electrical conducting object situated in the air gap of one or more coils connected in series, to which a voltage or alternating current is applied, **characterised by** the detection being effected by the variation in the signal level in the terminals of one or more of the coils.

7. **"ANALOG CONTROL MECHANISM"**, as described in the claims above, consisting of an analog position sensor or control mechanism based on the total or partial blocking of the magnetic flux by means of a moveable electrical conducting object situated in the air gap of one or more coils connected in series, **characterised by** their being made with printed circuit tracks to which a voltage or alternating current is applied.

8. **"ANALOG CONTROL MECHANISM"**, as described in the claims above, **characterised by** its being comprised of a rotary, slide or oscillating potentiometer for audio signal mixing or control based on the total or partial blocking of the magnetic flux by means of a moveable electrical conducting object situated in the air gap of one or more coils connected in series, to which a voltage or alternating current is applied; the control being effected by the variation in the signal level in the terminals of one or more of the coils and the use of this signal, whether modified or not, as the input to a volume-control electronic circuit.

9. **"ANALOG CONTROL MECHANISM"**, as described in the claims above, **characterised by** its being comprised of a rotary, slide or oscillating potentiometer for audio signal mixing or control based on the total or partial blocking of the magnetic flux by means of a moveable electrical conducting object situated in the air gap of one or more coils connected in series and made with printed circuit tracks, to which a voltage or alternating current is applied; the control being effected by the variation in the signal level in the terminals of one or more of the coils and the use of this signal, whether modified or not, as the input to a volume-control electronic circuit.

10. **"ANALOG CONTROL MECHANISM"**, as described in the claims above, **characterised by** the inclusion of an electronic adjustment of the dead track of one or both ends, for a rotary, slide or oscillating potentiometer for use in audio signal mixing or control.
